# EUROPÄISCHE PATENTANMELDUNG

(11) **EP 0 610 525 A1**
(43) Veröffentlichungstag der Anmeldung: **17.08.1994**
(21) Anmeldenummer: 93101967.3
(22) Anmeldetag: 09.02.1993
(51) Int. Cl.: H02K 1/12

(54) **Befestigung des Statorblechpaketes eines Elektromotors an Tragelementen**

(71) Anmelder: Licentia Patent-Verwaltungs-GmbH, D-60596 Frankfurt (DE)
(72) Erfinder: Appeldorn, Alfred, Dipl.-Ing., W-2904 Hatten (DE)
(74) Vertreter: Vogl, Leo, Dipl.-Ing.

(57) **Zusammenfassung**

Eine einfache und für eine automatische Fertigung geeignete Anordnung zum Befestigen eines Statorblechpaketes an profilstangenartigen Tragelementen (11,13,15,17) des Stators (3) in einem Elektromotor (1) wird erfindungsgemäß dadurch geschaffen, daß die Außenumfangsfläche (37) des Statorblechpaketes (25) in Motorachsrichtung verlaufende Aufnahmenuten zur formschlüssigen Lagerung der U-förmig ausgebildeten Tragelemente (11,17) aufweist, daß die Aufnahmenuten zwischen gegenüber der Außenumfangsfläche des Statorblechpaketes (25) vorstehend ausgebildeten und paarweise einander gegenüberliegenden Anschlagnasen angeordnet sind und daß die Nasenspitzen der Anschlagnasen von einigen Lamellenblechen zum festen Verbinden des Statorblechpaketes (25) mit den Tragelementen (11,17) hinter Anschlagkanten in den Tragelementen verstemmbar sind.

## Beschreibung

Die Erfindung betrifft eine Anordnung zum Befestigen eines Statorblechpaketes an Tragelementen eines Stators in einem Elektromotor der im Oberbegriff des Patentanspruchs 1 angegebenen Art.

Bei umlaufenden elektrischen Maschinen weist der Stator in der Regel ein aus einzelnen dünnen Blechen bestehendes Statorblechpaket auf. Diese Bleche werden in Gestalt von Ringen oder Ringsegmenten ausgestanzt und erhalten in der Regel an ihrem äußeren Umfang Ausnehmungen. In die durch diese Ausnehmungen gebildeten Nuten an der Oberfläche des Blechpaketes werden dann Klammern in Gestalt passender Blechstreifen eingedrückt, die das Paket zusammenhalten. Diese Blechstreifen sind gemäß der DE 14 88 490 A1 mit Lagerschilden zur Lagerung des Rotors verbunden.

Weiterhin werden die Statorbleche gemäß der CH-PS 301 165 durch Bolzen zusammengehalten, die in in den Ecken der Bleche vorgesehene Löcher eingedrückt sind. Diese Befestigungsbolzen tragen an den aus dem Blechpaket herausragenden Enden Gewinde, mittels welcher die die Lager aufweisenden Maschinenteile festgelegt sind.

Auch ist durch die DE-AS 12 01 907 eine Befestigung der Lagerträger am Statorblechpaket einer elektrischen Maschine bekannt, wobei das Statorblechpaket zwei Tragelemente von langgestreckter Form aufweist, die parallel zur Rotorachse liegen und diametral gegenüberliegend an der Außenoberfläche des Statorblechpaketes mittels biegbarer Zungen befestigt sind.

Der Erfindung liegt die Aufgabe zugrunde, eine Anordnung zum Befestigen eines Statorblechpaketes an Tragelementen eines Stators in einer elektrischen Maschine zu schaffen, die eine einfache Konstruktion besitzt und für eine automatische Fertigung geeignet ist. Diese Aufgabe wird durch die im Patentanspruch 1 gekennzeichneten Merkmale gelöst.

Die erfindungsgemäße Vorrichtung ermöglicht eine einfache und schnelle Befestigung des aus dünnen Blechen bestehenden Blechpaketes an mit Lagerschilden zu verbindenden Tragelementen, welche aus dünnen Blechen ausgeschnitten und zu einem U-Profil gebogen werden. Durch eine entsprechende Ausbildung der Verbindungsmittel an den freien Enden der Tragelemente ist es möglich, das Statorblechpaket mit den Tragelementen sehr einfach mit den Lagerschilden zu verbinden.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Elektromotor in Seitenansicht,
- Figur 2: das Blechpaket in Draufsicht,
- Figur 3: eine Einzelheit aus Figur 1,
- Figur 4: ein Tragelement nach dem Ausschneiden aus einem Blechstück und
- Figur 5: ein Lagerschild in Seitenansicht.

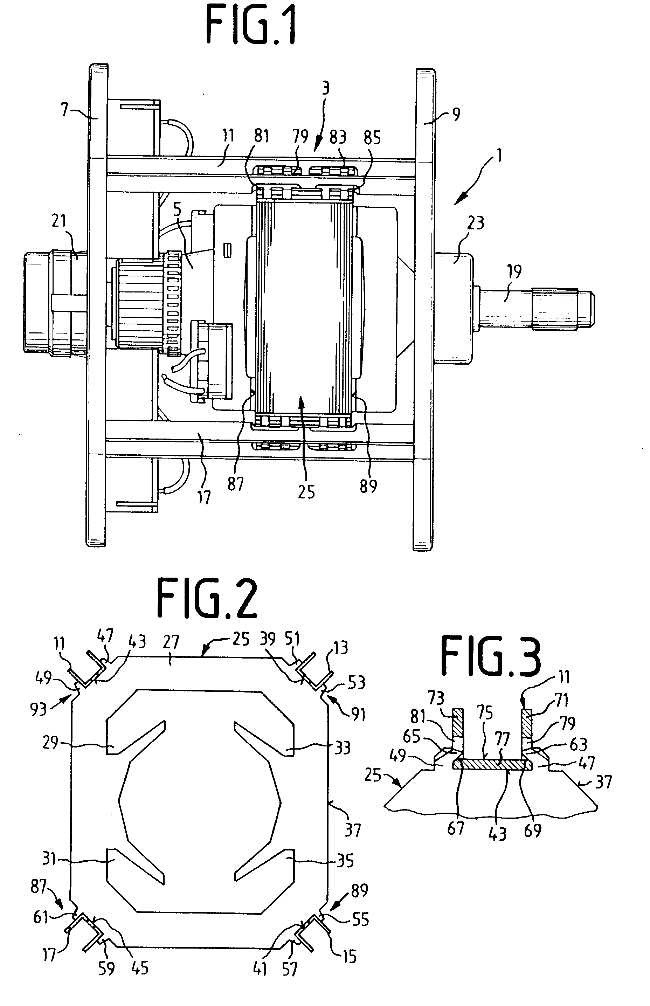

Die Figur 1 zeigt einen Elektromotor 1, der aus einem Stator 3, einem darin umlaufenden Rotor 5 und zwei zur Führung des Rotors 5 dienenden metallischen Lagerschilden 7, 9 besteht. Diese Lagerschilde 7, 9 werden mittels sie axial miteinander verbindender metallischer Tragelemente 11, 13, 15, 17 unter Zugspannung zusammengehalten. Der Rotor 5 besitzt eine Welle 19, die in Lagern 21, 23 der Lagerschilde 7, 9 zur Drehung gelagert ist. Das Statorblechpaket 25 wird durch eine Vielzahl von Lamellenblechen 27 gebildet, die einander identisch und axial so ausgefluchtet sind, daß sie axial erstreckende Nuten 29, 31, 33, 35 für nicht dargestellte Wicklungen des Elektromotors 1 ergeben. Die Lamellenbleche 27 des Statorblechpaketes 25 werden mittels Schweißnähte oder durch sonstige Verbindungsmittel in bekannter Weise zusammengehalten.

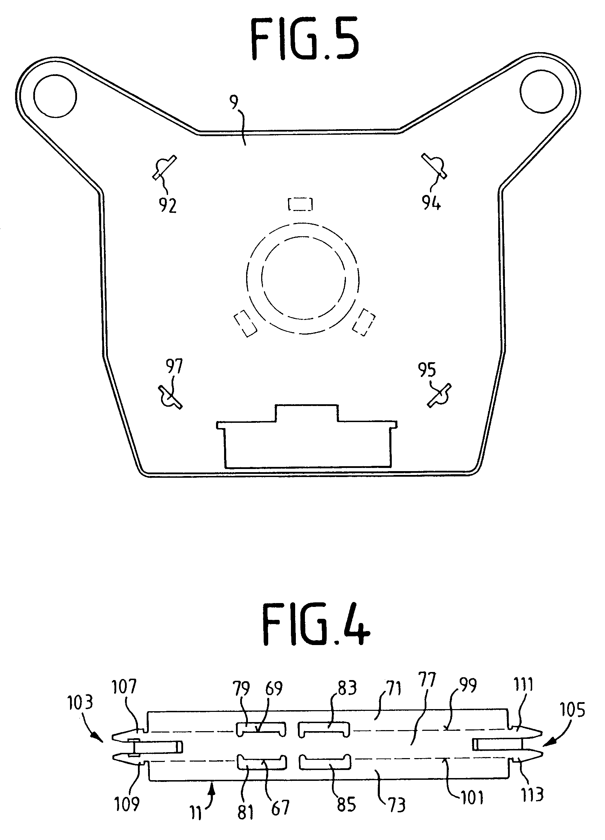

Weiterhin weist die Außenumfangsfläche 37 des Statorblechpaketes 25 in Motorachsrichtung verlaufende durchgehende Aufnahmenuten 39, 41, 43, 45 zur formschlüssigen Lagerung der U-förmig ausgebildeten Tragelemente 11, 13, 15, 17 auf. Diese Aufnahmenuten 39, 41, 43, 45 sind zwischen gegenüber der Außenumfangsfläche 37 des Statorblechpaketes 25 vorstehend ausgebildeten und paarweise einander gegenüberliegenden Anschlagnasen 47, 49, 51, 53, 55, 57, 59, 61 angeordnet. Zum festen Verbinden der einzelnen Tragelemente 11, 13, 15, 17 werden die Nasenspitzen 63, 65 der Anschlagnasen 47, 49 von einigen Lamellenblechen 27 hinter Anschlagkanten in den Tragelementen 11, 13, 15, 17 verstemmt. In der Figur 3 ist dieses für das Tragelement 11 dargestellt und wird im folgenden näher beschrieben, wobei die anderen Tragelemente 13, 15, 17 in der gleichen Weise befestigt werden. Die Seitenschenkel 71, 73 des Tragelementes 11 weisen mehrere Aussparungen 79, 81 zur Bildung von Anschlagkanten auf. Gemäß den Figuren 1 und 4 weisen die Seitenschenkel 71, 73 des Tragelementes 11 zumindest je eine Aussparung 79, 81, 83, 85 im Bereich der beiden Stirnflächen 87, 89 des Statorblechpaketes 25 auf. Das Verstemmen der Nasenspitzen 63, 65 der Anschlagnasen 47, 49 wird dadurch erleichtert, daß die oberen freien Kanten 67, 69 der Bodenfläche 77 mit einer Anphasung versehen sind, siehe Figur 3.

Die Statorbleche 27 des Statorblechpaketes 25 sind vorzugsweise viereckig ausgebildet, wobei die Aufnahmenuten 39, 41, 43, 45 für die Tragelemente 11, 13, 15, 17 in den abgeschrägten Ecken 87, 89, 91, 93 des Statorblechpaketes 25 angeordnet sind. Im Rahmen der Erfindung sind selbstverständlich auch andere Formen der Statorbleche 27 einsetzbar. In vorteilhafter Ausgestaltung ist das Statorblechpaket 25 mit vier Aufnahmenuten 39, 41, 43, 45 versehen, von denen jeweils zwei diametral gegenüberliegend angeordnet sind.

In der Figur 4 ist das Tragelement 11 nach dem Ausschneiden aus einem Blechstück dargestellt. Hierbei sind die Aussparungen 79, 81, 83, 85 gleich mit ausgestanzt worden. Danach erfolgt ein Biegevorgang, wobei die Seitenschenkel 71, 73 um die Biegelinien 99, 101 gegenüber der Bodenfläche 77 um 90 Grad derart hochgebogen werden, daß das Tragelement 11 ein U-förmiges Querschnittprofil erhält. Die alle gleich ausgebildeten Tragelemente 11, 13, 15, 17 weisen an den Enden Verriegelungselemente 103, 105 auf, deren Rastnasen 107/109, 111/113 durch die Ausnehmungen 92, 94, 95, 97 in den Lagerschilden 9 (7) hindurchsteck- und danach durch Verschränken verrastbar sind.

Erfindungsgemäß weist der Stator 3 einfach und billig herzustellende Tragelemente auf, an welche das Statorblechpaket 25 schnell und sicher befestigt werden kann. Diese Befestigung kann durch einen Fertigungsautomaten erfolgen.

## Patentansprüche

1. Anordnung zum Befestigen eines Statorblechpaketes an Tragelementen des Stators in einem Elektromotor, wobei die durch Ausschneiden und Umbiegen aus Blechen hergestellten Tragelemente an der Außenumfangsfläche des Statorblechpaketes mittels verformbarer Zungen befestigbar sind, **dadurch gekennzeichnet,** daß die Außenumfangsfläche (37) des Statorblechpaketes (25) in Motorachsrichtung verlaufende Aufnahmenuten (41, 43, 45, 39) zur formschlüssigen Lagerung der U-förmig ausgebildeten Tragelemente (11, 13, 15, 17) aufweist, daß die Aufnahmenuten (39, 41, 43, 45) zwischen gegenüber der Außenumfangsfläche (37) des Statorblechpaketes (25) vorstehend ausgebildeten und paarweise einander gegenüberliegenden Anschlagnasen (47, 49, 51, 53, 55, 57, 59, 61) angeordnet sind und daß die Nasenspitzen (63, 65) der Anschlagnasen (47, 49) von einigen Lamellenblechen (27) zum festen Verbinden des Statorblechpaketes (25) mit den Tragelementen (11) hinter Anschlagkanten in den Tragelementen (11) verstemmbar sind.

2. Anordnung nach Anspruch 1, dadurch **gekennzeichnet,** daß die Seitenschenkel (71, 73) der U-förmigen Tragelemente (11) von der Oberkante (75) der Bodenfläche (77) ausgehende Ausnehmungen (79, 81) aufweisen, durch welche die Nasenspitzen (63, 65) der Anschlagnasen (47, 49) hinter den als Anschlagkanten dienenden oberen Seitenkanten (67, 69) der Bodenfläche (77) verstemmbar sind.

3. Anordnung nach Anspruch 2, **dadurch gekennzeichnet,** daß die oberen freien Seitenkanten (67, 69) der Bodenfläche (77) mit einer Anfasung versehen sind.

4. Anordnung nach einem der vorhergehenden Ansprüche, **dadurch gekennzeichnet,** daß die Seitenschenkel (71, 73) der Tragelemente (11) mehrere Aussparungen (79, 81) zur Bildung von Anschlagkanten aufweist.

5. Anordnung nach einem der vorhergehenden Ansprüche, **dadurch gekennzeichnet,** daß die Seitenschenkel (71, 73) der Tragelemente (11) zumindest je eine Aussparung (79, 81, 83, 85) im Bereich der beiden Stirnflächen (87, 89) des Statorblechpaketes (25) aufweisen.

6. Anordnung nach einem der vorhergehenden Ansprüche, **dadurch gekennzeichnet,** daß die Statorbleche (27) viereckig ausgebildet sind und daß die Aufnahmenuten (39, 41, 43, 45) für die Tragelemente (11, 13, 15, 17) in den abgeschrägten Ecken (87, 89, 91, 93) des Statorblechpaketes (25) angeordnet sind.

7. Anordnung nach Anspruch 6, **dadurch gekennzeichnet,** daß das Statorblechpaket (25) mit vier Aufnahmenuten (39, 41, 43, 45) für die vier Tragelemente (11, 13, 15, 17) versehen ist.
